# EUROPEAN PATENT SPECIFICATION

(11) **EP 2 958 724 B1**
(45) Date of publication and mention of the grant of the patent: **13.06.2018**
(21) Application number: 14754125.4
(22) Date of filing: 12.02.2014
(51) Int. Cl.: B29C 33/62, C08K 5/49

(54) **INTERNAL MOLD RELEASE AGENTS FOR POLYURETHANE MATERIALS**
INTERNES FORMTRENNMITTEL FÜR POLYURETHANMATERIALIEN
AGENTS DE DÉMOULAGE DE MOULE INTERNE POUR MATÉRIAUX DE POLYURÉTHANE

(30) Priority: 19.02.2013 US 201313770295
(43) Date of publication of application: 30.12.2015
(73) Proprietor: Henkel AG & Co. KGaA, 40589 Düsseldorf (DE); Henkel IP & Holding GmbH, 40589 Düsseldorf (DE)
(72) Inventor: HAN, Victor, Qiwen, East Brunswick, New Jersey 08816 (US); FERENCZ, Andreas, 40223 Duesseldorf (DE); LAMMERSCHOP, Olaf, 47802 Krefeld (DE); WANG, Yongxia, Bridgewater, New Jersey 08807 (US)
(86) International application number: PCT/US2014/015954
(87) International publication number: WO 2014/130312

(56) References cited:
- WO-A1-02/26875
- JP-A- H1 143 493
- JP-A- 2001 072 692
- US-A- 3 893 868
- US-A- 4 258 169
- US-A1- 2010 234 498

## Description

### Field

The present disclosure relates generally to an internal mold release agent (IMRA) which effectively releases a cured polyurethane (PUR) material from a mold.

### Brief Description of Related Technology

Resin transfer molding ("RTM") is a process by which a resin -- conventionally and predominately, epoxy-based resin or maleimide-based resin -- is pumped at low viscosities and under pressure into a closed mold containing a preform of dry fiber or fabric. The resin infuses into the preform to make a fiber-reinforced composite article. The RTM process can be used to produce, at low cost, composite parts that are complex in shape. These parts typically require continuous fiber reinforcement along with inside mold line and outside mold line controlled surfaces. The matrix resin used in the RTM and VaRTM advanced processes should desirably have a low injection viscosity to allow complete wetting and infusion of the preform. Two component epoxy resin compositions have been used, where the epoxy resin and the hardener components are combined immediately prior to use. One component epoxy resin compositions oftentimes must be stored at controlled low temperatures to prevent premature cross-linking reactions and to extend storage life. Otherwise, the viscosities of such one component epoxy resin compositions would build far too quickly, thus rendering their working life unsuitable (or at least not desirable) from a commercial standpoint. Polyurethane has more recently been used as a matrix resin for resin transfer molding (RTM) and Reaction Injection Molding (RIM) processes.

One critical requirement of the RTM and RIM processes is that the molded article should be easily removed from the mold without adhering to the mold. Any adhesion of the cured article to the mold will result in damage to the article. One method for facilitating demolding is the application of "external mold release agents" (EMRAs) on the mold. EMRA is applied to the mold surface prior to disposing the resin within the mold. However, the use of EMRAs has disadvantages, e.g., time consumption, repeated application between batches, and negative environmental impact.

Another method for facilitating demolding is the use of "internal mold release agents" (IMRAs). An IMRA is usually a surface active additive in a resin formulation, which can migrate from the resin bulk to the resin/mold interface. Because the IMRA is incorporated in formulation, there is no need of repeated application of a mold release agent on the mold surface. After molding the IMRA lessens adhesion of the molded article from the mold, facilitating separation of the molded article from the mold.

For decades research has been conducted to find an effective IMRA for polyurethane. Previously, fatty acid derivatives, esters, metal soaps, organic salts and siloxanes/silicones have been tried as polyurethane IMRAs. None of these candidates provide an effective IMRA that could be incorporated in a polyurethane matrix resin to facilitate release of a molded object from a metal, e.g., steel, mold in the RTM process.

These IMRA candidates have been incompatible with the polyurethane matrix resin, separating from the resin and requiring mixing before and during use. It would be beneficial to provide a polyurethane IMRA that was compatible with polyurethane matrix resin and which does not separate from the resin after days or weeks of storage.

These IMRA candidates for polyurethane matrix resin require molding temperatures of 120 °C or more to provide a useful release of the molded article from the mold. It would be beneficial to provide a polyurethane IMRA that provided a useful release of the molded article from the mold at low temperature, for example about 90°C.

These IMRA candidates for polyurethane matrix resin have resulted in a cloudy, opaque polyurethane matrix resin. It would be beneficial to provide a polyurethane IMRA that when mixed with the polyurethane matrix resin provides a clear composition.

### Summary

The present invention relates to an IMRA suitable for incorporation into a polyurethane matrix resin. The IMRA will facilitate release of a molded object from a metal e.g., steel, mold in a molding process. Advantageously, the molding process is RTM or RIM.

In one aspect the IMRA comprises a polyoxyethylene alkyl phosphate ester, a blend or a reaction product thereof.

One embodiment provides a two-part polyurethane composition comprising as an IMRA. a polyoxyethylene alkyl phosphate ester, a blend or a reaction product thereof, wherein the polyoxyethylene alkyl phosphate comprises the structure: 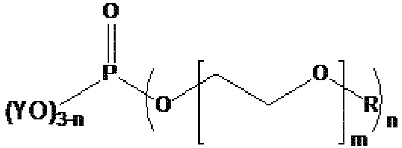 wherein
each R can independently be hydrogen, hydrocarbyl, or substituted hydrocarbyl;
each Y can independently be hydrogen, hydrocarbyl, or substituted hydrocarbyl;
each m is independently an integer from 1 to about 500; and
n is an integer from 1 to 3.

One embodiment provides a method of reducing adhesion of cured reaction products of a two-part polyurethane composition to a metal mold. In one aspect the internal mold release agent comprises a polyoxyethylene alkyl phosphate ester or the reaction product of a polyoxyethylene alkyl phosphate ester.

One embodiment provides a process for molding articles using a two-part polyurethane composition comprising an IMRA. In one aspect the IMRA comprises a polyoxyethylene alkyl phosphate ester or a reaction product thereof.

The disclosed compounds include any and all isomers and stereoisomers. In general, unless otherwise explicitly stated the disclosed materials and processes may be alternately formulated to comprise, consist of, or consist essentially of, any appropriate components, moieties or steps herein disclosed. The disclosed materials and processes may additionally, or alternatively, be formulated so as to be devoid, or substantially free, of any components, materials, ingredients, adjuvants, moieties, species and steps used in the prior art compositions or that are otherwise not necessary to the achievement of the function and/or objective of the present disclosure.

When the word "about" is used herein it is meant that the amount or condition it modifies can vary some beyond the stated amount so long as the function and/or objective of the disclosure are realized. The skilled artisan understands that there is seldom time to fully explore the extent of any area and expects that the disclosed result might extend, at least somewhat, beyond one or more of the disclosed limits. Later, having the benefit of this disclosure and understanding the concept and embodiments disclosed herein, a person of ordinary skill can, without inventive effort, explore beyond the disclosed limits and, when embodiments are found to be without any unexpected characteristics, those embodiments are within the meaning of the term about as used herein.

Unless defined otherwise, all technical and scientific terms used herein have the same meaning as is commonly understood by one of ordinary skill in the art. As used herein for each of the various embodiments, the following definitions apply.

"Alkyl" or "alkane" refers to a hydrocarbon chain or group containing only single bonds. The alkane can be a straight hydrocarbon chain or a branched hydrocarbon group. The alkane can be cyclic. The alkane can contain 1 to 20 carbon atoms, advantageously 1 to 10 carbon atoms and more advantageously 1 to 6 carbon atoms. In some embodiments the alkane can be substituted. Exemplary alkanes include methyl, ethyl, n-propyl, isopropyl, isobutyl, n-butyl, sec-butyl, tert-butyl, isopentyl, neopentyl, tert-pentyl, isohexyl and decyl.

"Alkenyl" or "alkene" refers to a hydrocarbon chain or group containing one or more double bonds. The alkenyl can be a straight hydrocarbon chain or a branched hydrocarbon group. The alkene can be cyclic. The alkene can contain 1 to 20 carbon atoms, advantageously 1 to 10 carbon atoms and more advantageously 1 to 6 carbon atoms. The alkene can be an allyl group. The alkene can contain one or more double bonds that are conjugated. In some embodiments the alkene can be substituted.

"Alkoxy" refers to the structure -OR, wherein R is hydrocarbyl.

"Alkyne" or "alkynyl" refers to a hydrocarbon chain or group containing one or more triple bonds. The alkyne can be a straight hydrocarbon chain or a branched hydrocarbon group. The alkyne can be cyclic. The alkyne can contain 1 to 20 carbon atoms, advantageously 1 to 10 carbon atoms and more advantageously 1 to 6 carbon atoms. The alkyne can contain one or more triple bonds that are conjugated. In some embodiments the alkyne can be substituted.

"Aryl" or "Ar" refers to a monocyclic or multicyclic aromatic group. The cyclic rings can be linked by a bond or fused. The aryl can contain from 6 to about 30 carbon atoms; advantageously 6 to 12 carbon atoms and in some embodiments 6 carbon atoms. Exemplary aryls include phenyl, biphenyl and naphthyl. In some embodiments the aryl is substituted.

"Effective amount" is the amount of an IMRA that can be added to one part of a two part reactive polyurethane molding composition and which lessens adhesion of cured reaction products of the polyurethane molding composition to a metal mold but does not separate from the polyurethane molding composition during commercial storage.

"Ester" refers to the structure R-C(O)-O-R' where R and R' are independently selected hydrocarbyl groups. The hydrocarbyl groups can be substituted or unsubstituted.

"Halogen" or "halide" refers to an atom selected from fluorine, chlorine, bromine and iodine.

"Hetero" refers to one or more heteroatoms in a structure. Exemplary heteroatoms are independently selected from N, O and S.

"Hydrocarbyl" refers to a group containing carbon and hydrogen atoms. The hydrocarbyl can be linear, branched, or cyclic group. The hydrocarbyl can be alkyl, alkenyl, alkynyl or aryl. In some embodiments, the hydrocarbyl is substituted.

"Substituted" refers to the presence of one or more substituents on a molecule in any possible position. Useful substituents are those groups that do not significantly diminish the disclosed reaction schemes. Exemplary substituents include, for example, H, halogen, (meth)acrylate, epoxy, oxetane, urea, urethane, N₃, NCS, CN, NCO, NO₂, NX¹X², OX¹, C(X¹)₃, C(halogen)₃, COOX¹, SX¹, Si(OX¹)ᵢX²₃₋₁, alkyl, alcohol, alkoxy; wherein X¹ and X² each independently comprise H, alkyl, alkenyl, alkynyl or aryl and i is an integer from 0 to 3.

### Brief Description of the Drawings

Referring now to the drawings wherein like elements are numbered alike in the several Figures:

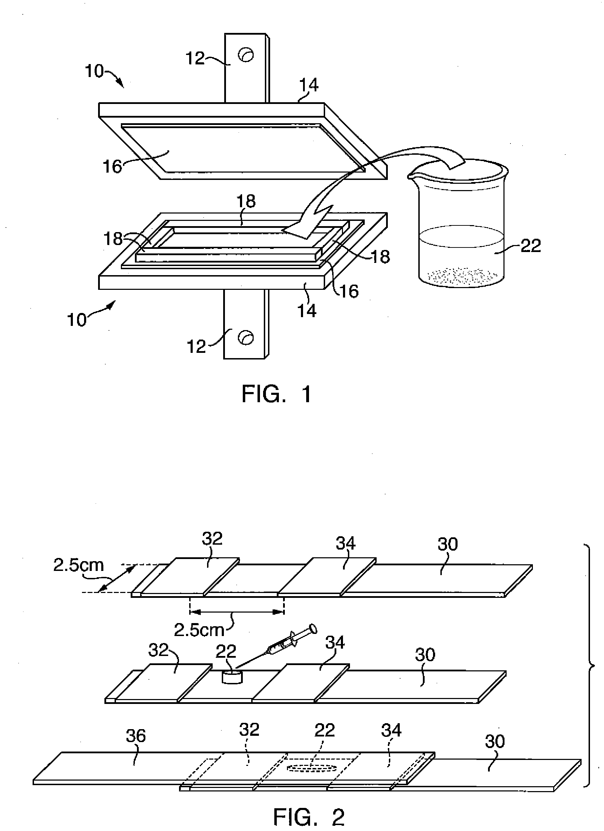

FIG. 1 is a schematic drawing of a mini-mold as used in tensile testing.
FIG. 2 is a schematic drawing of a mini-mold as used in shear testing.

### Detailed Description

The internal mold release agent (IMRA) can be used with a one or two part polyurethane composition. Advantageously, the polyurethane composition will have properties suitable for molding articles. More advantageously, the polyurethane composition will have properties suitable for use as a matrix resin for resin transfer molding (RTM) and Reaction Injection Molding (RIM) processes that utilize metal, e.g. steel, molds.

Suitable two component polyurethane adhesive compositions comprise one or more polyols as the first component and one or more isocyanates as the second component. To obtain a fully cured network, the equivalent ratio of NCO:OH is generally 0.5 (NCO):1 (OH) to 10(NCO):1(OH), preferably 0.9(NCO):1(OH) to 5(NCO):1(OH), and most preferably 1 (NCO):1(OH) to 2(NCO): 1 (OH). An excess of isocyanate ensures complete reaction of the polyol. The excess isocyanate will ordinarily become part of the final network through reaction with atmospheric or substrate moisture.

For effective and efficient mixing of the adhesive it is desirable that the two components have similar viscosities and that the volumes of the two components to be mixed are roughly equal. Since the densities of the two components are normally similar, equal volumes correspond to about equal weights of the two components.

The polyol component of the adhesive composition may comprise one or more of various polyols. Preferably the polyols to be utilized have hydroxyl functionality of at least two and molecular weights in the range of about 500 to about 5000 and include polyester polyols, polyether polyols, polyolefin polyols, polycarbonate polyols and mixtures thereof. The polyols that may be utilized include polyhydroxy polyethers (substituted or unsubstituted polyalkylene ether glycols or polyhydroxy polyalkylene ethers), polyhydroxy polyesters, the ethylene or propylene oxide adducts of polyols and the monosubstituted esters of glycerol, polybutadiene polyol, polyisobutylene polyol, naturally derived polyols, as well as mixtures thereof. "Polymer polyols" are also suitable, i.e., graft polyols containing a proportion of a vinyl monomer, polymerized in situ, such as Niax 34-28, commercially available from Dow Chemical Company. Additional polyols include polycaprolactone polyols and polycarbonate polyols. The polyol component is typically used in an amount of between about 25 weight percent to about 75 weight percent of the entire composition.

Examples of polyether polyols include linear and/or branched polyethers having hydroxyl groups, and contain substantially no functional group other than the hydroxyl groups. Examples of the polyether polyol may include polyoxyalkylene polyol such as polyethylene glycol, polypropylene glycol, polybutylene glycol and the like. Further, a homopolymer and a copolymer of the polyoxyalkylene polyols may also be employed. Copolymers of the polyoxyalkylene polyols may include an adduct of at least one compound selected from the group consisting of ethylene glycol, propylene glycol, diethylene glycol, dipropylene glycol, triethylene glycol, 2-ethylhexanediol-1,3,glycerin, 1,2,6-hexane triol, trimethylol propane, trimethylol ethane, tris(hydroxyphenyl)propane, triethanolamine, triisopropanolamine, ethylenediamine and ethanolamine; with at least one compound selected from the group consisting of ethylene oxide, propylene oxide and butylene oxide.

Examples of polyester polyols include unsaturated polyester polyols having at least one ethylenically unsaturated group per molecule and predominantly hydroxyl end groups and preferably an acid number less than five. The polyester polyol may be prepared from an oligomer of an alpha, beta-ethylenically unsaturated dicarboxylic acid compound obtained by the condensation reaction of one or more of a saturated di- or polycarboxylic acid or anhydride with an excess of glycols orpolyhydric alcohols. The unsaturated polyester polyol can also be prepared from unsaturated di- or polycarboxylic acid(s) or anhydride(s) with an excess of glycols and/or polyhydric alcohol(s). The polyester polyols preferably have an acid number less than five, and most preferably less than about two.

Examples of saturated di- or polycarboxylic acids include isophthalic, orthophthalic, terephthalic, adipic, succinic, sebacic acid and mixtures thereof, with adipic acid being preferred. Typical unsaturated carboxylic acids or anhydrides include maleic acid, fumaric acid, citaconic acid, chloromaleic acid, allyl succinic acid, itaconic acid, mesaconic acid, their anhydrides and mixtures thereof, with maleic anhydride being the preferred choice. Examples of glycols and polyhydric alcohols which are useful in the invention include neopentyl glycol, ethylene glycol, diethylene glycol, triethylene glycol, propylene glycol, dipropylene glycol, 1,4-butanediol, polyethylene glycol, glycerol, mannitol, 1,propanediol, pentaerythritol, 1,6-hexanediol, 1,3-butanediol and mixtures thereof. An exemplary polyester polyol is the polyester obtained by reacting adipic acid with an excess of diethylene glycol.

A number of suitable polyols are commercially available. Non-limiting examples include polyethers such as ARCOL PPG (Bayer), MULTRANOL (Bayer), PolyG (Arch) and Pluracol (BASF); polyesters such as Dynacoll (Degussa), Fomrez (Crompton), Rucoflex (Bayer) and Stepanpol (Stepan); and polybutadiene such as PolyBD (Sartomer).

The isocyanate component is typically used in an amount of between about 25 weight percent to about 75 weight percent of the entire composition. The isocyanate component of the adhesive composition comprises one or more of various suitable polymeric, monomeric or prepolymeric isocyanates. Suitable diisocyanates include ethylene diisocyanate; 1,4-tetramethylene diisocyanate; 1,4 and/or 1,6-hexamethylene diisocyanate; 1,12-dodecane diisocyanate; cyclobutane-1,3-diisocyanate; cyclohexane-1,3- and 1,4-diisocyanate and mixtures of these isomers; 1-isocyanato-3,3,5-trimethyl-5-isocyanatomethyl cyclohexane; 2,4- and 2,6-hexahydrotolylene diisocyanate and mixtures of these isomers; hexahydro-1 ,3- and/or 1,4-phenylene diisocyanate; perhydro-2,4'- and/or 4,4'-diphenyl methane diisocyanate; 1,3- and 1,4-phenylene diisocyanate; 2,4- and 2,6-toluene diisocyanate and mixtures of these isomers; diphenyl methane-2,4'- and/or 4,4'-diisocyanate; naphthylene-1,5-diisocyanate; 1,3- and 1,4-xylylene diisocyanate, 4,4'-methylene-bis(cyclohexyl isocyanate), 4,4'-isopropyl-bis(cyclohexyl isocyanate), 1,4-cyclohexyl diisocyanate and 3-isocyanatomethyl-3,5,5-trimethylcyclohexyl isocyanate (IPDI); 2,4- and 2,6-toluene diisocyanate; diphenylmethane diisocyanate; hexamethylene diisocyanate; dicyclohexylmethane diisocyanate; isophorone diisocyanate; 1-methyoxy-2,4-phenylene diisocyanate; 1-chlorophenyl-2,4-diisocyanate; p-(1-isocyanatoethyl)-phenyl isocyanate; m-(3-isocyanatobutyl)-phenyl isocyanate and 4-(2-isocyanate-cyclohexylmethyl)-phenyl isocyanate, isophorone diisocyanate, toluene diisocyanate and mixtures thereof.

It is also possible to use aliphatic or aromatic diisocyanates of the type which are obtained by reacting excess diisocyanate with polyfunctional compounds containing hydroxyl or amine groups and which, in practical polyurethane chemistry, are referred to either as "modified isocyanates" or as "isocyanate prepolymers".

A number of suitable isocyanates are commercially available. Non-limiting examples include isocyanate prepolymer Vorite 689 derived from castor oil (available from Caschem Company), Mondur series (e.g., Mondur M) (Bayer), Desmodur series (e.g, Desmodur H) (Bayer), Rubinate series (e.g., Rubinate M) (Huntsman), Lupranate series (e.g., Lupranate MI) (BASF), and Tolonate series (e.g., Tolonate HDT) (Perstorp)

In some embodiments the polyurethane composition comprises at least one catalyst. In some embodiments the catalyst comprises tin. In some embodiments the catalyst is an organotin catalyst. The catalyst may comprise from about 0.001 to about 1 weight percent of the adhesive and preferably comprises in the range of about 0.01 to about 0.1 weight percent of the adhesive. The tin compounds that may comprise part of the present catalyst compositions are conventional catalysts for the reaction of hydroxyl-containing organic molecules with isocyanates to form urethane groups. Representative members of this class of tin compounds include stannous salts of carboxylic acids, organostannonic acids such as butylstannonic acid, organothiostannonic acids, diorganotin oxides such as dibutyltin oxide, diorganotin sulfides, mono- and diorganotin halides such as dimethyltin dichloride, mono- and diorganotin carboxylates such as dibutyltin dilaurate, dibutyltin adipate and dibutyltin maleate, mono- and diorganotin mercaptides such as dibutyltin bis(lauryl mercaptide), mono- and diorganotin derivatives of mercaptocarboxylic acid esters and mercaptoalkanol esters such as dibutyltin-S,S'-bis(isooctyl mercaptoacetate) and dibutyltin S,S'-bis(mercaptoethyl stearate), diorganotin oxides such as dibutyltin oxide and mono- and diorganotin derivatives of beta-diketones such as dibutyltin bis-acetylacetonate.

In some embodiments the polyurethane composition comprises additional catalysts, for example organometallic catalysts. Some examples of suitable organometallic catalysts include organometallic compounds of lead, iron, bismuth, mercury, zirconium, titanate, zinc, cobalt and the like. The use of a delayed action catalyst such as an iron pentanedione or a bismuth carboxylate, as described in U.S. Pat. No. 4,611,044, herein incorporated by reference, is also possible.

In some embodiments the polyurethane composition comprises a tertiary amine catalyst. The purpose of the tertiary amine catalyst is to activate the isocyanate group to nucleophilic substitution to promote the reaction with water to give carbon dioxide generation and to react with the polyhydroxyl compound to give urethane formation. Examples of tertiary amine catalysts include N,N-dimethylaminoethanol, tris(dimethyl aminopropyl) amine, N,N-dimethylcyclohexylamine, bis-(2-methyl aminoethyl) ether, N,N-dimethylbenzylamine, diaminobicyclooctane, triethylamine, tributylamine, N-methylmorpholine, N-ethyl-morpholine, N-coco-morpholine, N,N,N',N"-tetramethylethylene-diamine, 1,4-diaza-bicyclo-(2,2,2)-octane, N-methyl-N'-dimethyl-aminoethylpiperazine, N,N-dimethylbenzylamine, bis-(N,N-diethyl-aminoethyl)-adipate, N,N-diethylbenzylamine, pentamethyl-diethylenetriamine, N,N-dimethyl-cyclohexylamine, N,N, N',N'-tetramethyl-1,3-butanediamine, N,N-dimethyl-beta.-phenylethylamine, 1,2-dimethylimidazole, 2-methylimidazole and mixtures thereof. Also useful are the commercially available tertiary amines such as Niax A-1, available from WITCO; Thancat DD, available from Huntsman; and the like. Mannich bases known per se obtained from secondary amines such as dimethylamine and aldehydes, preferably formaldehyde, or ketones such as acetone, methyl ethyl ketone or cyclohexanone and phenols such as phenol nonylphenol or bisphenol and silaamines having carbon-silicon bonds as described, e.g., in German Patent No. 1,229,290 and U.S. Pat. No. 3,620,984, may also be used as catalysts. Examples include 2,2,4-trimethyl-2-silamorpholine and 1,3-diethylamino-ethyltetramethyl-disiloxane. Delayed action catalysts such as those in the NIAX group or DABCO group may also be used.

In some embodiments the polyurethane composition comprises chain extenders. These include low molecular weight diols and polyols, such as ethylene glycol, propylene glycol, 1,4-butanediol, diethylene glycol, hexane diol, trimethyol propane, glycerol, hydroxyl-terminated polyethylene oxide (polyethylene glycol), glycerin and mixtures thereof. One preferred chain extender useful in the present invention is ethylene glycol. Other common chain extenders which may be used in the invention include diamines and polyamines that, when blended with the polyol component and reacted with the isocyanate component, will not phase separate from the compositions. Examples of such amine compounds are ethylenediamine, polyoxypropylene diamine, 1,2- and 1,4-diaminocyclohexane in trans-, cis- or their mixture, dimethyldiaminodicyclohexylmethane, and 1,2-propanediamine. Still other chain extenders which may be used in the invention include amine containing alcohols or low molecular weight polyols. Examples are monoethanolamine, diethanolamine, and triethanolamine, tetra(2-hydroxypropyl) ethylenediamine available as Quadrol polyol (BASF Corporation).

Such chain extenders provide several benefits to the compositions of the invention including reaction with the isocyanate to improve flexibility, impact resistance and reaction rate. Chain extenders comprise in the range of about 0 to about 20 weight percent of the composition, and preferably from about 3 to about 15 weight percent of the composition.

In some embodiments the polyurethane composition optionally comprises one or more fillers and/or fibers. Various organic or inorganic fillers or fibers can be added to reduce the exotherm of the reaction of the two components, provide physical reinforcement, and/or reduce its cost. Fillers include such materials as talc, calcium carbonate, silica beads, calcium sulfate, aluminum trihydrate, ammonium polyphosphate, etc., with calcium carbonate and aluminum trihydrate and mixtures thereof being preferred in the invention. The amounts of filler or other additives will vary depending on the desired application.

In some embodiments the polyurethane composition optionally comprises one or more plasticizers, pigments, colorants, flame retardants, processing aids such as thixotropic agents and internal lubricants, all of which are well known to those skilled in the art. These optional components are added in known ranges to provide known effects to the uncured composition and/or cured reaction products of the composition.

The internal mold release agent (IMRA) is a surface active, polyoxyethylene alkyl phosphate ester or a combination (blend or reaction product) of the phosphate ester with other chemicals. In one embodiment the IMRA excludes materials that do not include a polyoxyethylene alkyl phosphate ester or a reaction product of polyoxyethylene alkyl phosphate ester. Advantageously, the IMRA will be a solvent free liquid. A polyurethane formulation comprising the IMRA has high formulation stability, clean release, low release strength, and high product transparency.

In one embodiment the IMRA comprises polyoxyethylene alkyl phosphate ester having the following structure: 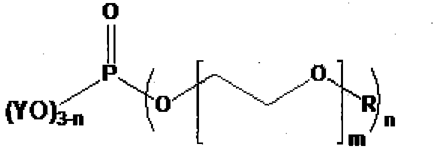 wherein
each R can independently be hydrogen, hydrocarbyl, or substituted hydrocarbyl;
each Y can independently be hydrogen, hydrocarbyl, or substituted hydrocarbyl;
each m is independently an integer from 1 to about 500; and
n is an integer from 1 to 3. In one advantageous embodiment each Y is hydrogen and each R is alkyl. In one advantageous embodiment n is 1.

In one embodiment the IMRA comprises polyoxyethylene alkyl phosphate ester having the following structure: 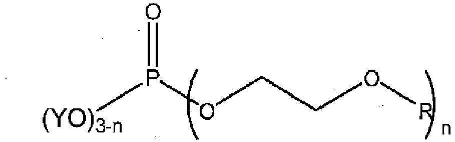 wherein
each R can independently be hydrogen, hydrocarbyl, or substituted hydrocarbyl;
each Y can independently be hydrogen, hydrocarbyl, or substituted hydrocarbyl; and
n is an integer from 1 to 3. In one advantageous embodiment each Y is hydrogen and each R is alkyl. In one advantageous embodiment n is 1.

An effective amount of the disclosed IMRA can be added to a polyurethane molding composition. In one embodiment an effective amount of IMRA is added as a separate third component to the mixed polyurethane molding composition while the composition is being disposed into the mold. In another embodiment an effective amount of IMRA is added to one of the separated components of a two component polyurethane molding composition. Advantageously, an effective amount of IMRA is added to the polyol component of a two component polyurethane molding composition.

An effective amount of the disclosed IMRA will be in the range of about 0.01 percent to about 60 percent by weight of polyurethane molding composition. Advantageously, an effective amount of the disclosed IMRA will be in the range of about 0.1 percent to about 30 percent by weight of polyurethane molding composition. Typically, an effective amount of the disclosed IMRA will be in the range of about 0.5 percent to about 15 percent by weight of polyurethane molding composition.

An effective amount of the disclosed IMRA will not interfere with molding and reaction of the polyurethane molding composition but will lessen adhesion of cured reaction products of the polyurethane molding composition to metal molds. In some embodiments an effective amount of the disclosed IMRA will be compatible with polyurethane resin component with which it is combined and will not separate from the resin component during commercial storage periods of days or weeks. In some embodiments an effective amount of the disclosed IMRA will lessen adhesion of cured reaction products of the polyurethane molding composition to a metal mold at temperatures as low as about 90°C. In some embodiments an effective amount of the disclosed IMRA when mixed with the polyurethane molding composition provides an optically clear mixture.

The following examples are included for purposes of illustration so that the disclosure may be more readily understood.

### Test procedures

### Tensile test

Two T-plates (each 10) were used to form a mini-mold for the tensile test. Each T-plate 10 was made by attaching a pulling handle 12 on one side of a 51 mm (length) x 51 mm (width) x 6 mm (thickness) flat aluminum plate 14, and attaching a steel panel 16 on the other side. Four steel or rubber strips 18 were glued on top of the steel panel 16 surface of one T-plate 10 to form a mini-mold. A final formulation 22 was transferred into the mini-mold and the other T-plate was used as a lid to close the mini-mold and form a tensile test specimen. The formulation in the closed mini-mold was allowed to cure in a 90 °C oven for 30 minutes, and then the top T-plate was pulled upwards until debonding of the cured formulation from the mold occurred. The debonding surface of mini-mold contacting the cured formulation was inspected immediately and the debonding mode was recorded in two categories: "Clean" when no polymer residual was observed on the plate surface; "Stained" when polymer residual was observed on the plate surface.

### Shear test

A 10 cm (length) x 2.5 cm (width) x 2 mm (thickness) flat steel panel 30 was covered by two, 0.13 mm thick tape strips 32, 34 spaced 2.5 cm apart to form a mini-mold. A weighed amount (0.03 ± 0.01 grams) of a composition formula 22 was transferred into the mini-mold between tape strips 32, 34. A second flat steel panel 36 was used as a lid to close the mini-mold and form a lap shear test specimen. The composition formula in the closed mini-mold was allowed to cure in a 90 °C oven for 30 minutes, bonding to steel panels 30, 36. The cured assembly was tested immediately for shear strength by pulling on steel panels 30, 36. The maximum stress required to shear the calculated bond area of the cured composition formula (shear strength) was used to find the debonding strength.

### Formulating procedures

### Premix - Formulation P01

50 g zinc stearate (Sigma-Aldrich) and 50 g tricaprylmethylammonium chloride (Alfa Aesar) were charged in a 1-pint aluminum can. The can was placed in a vacuum system equipped with heating and agitation. The mixture was agitated at high speed at 200°F (93°C) under vacuum for 150 minutes. The product was purged with nitrogen and stored in a desiccator.

### Pre-reaction - Formulation R01

50 g TIGOMER® H-SI 2311 (Evonik Industries AG) and 50 g polyoxyethylene tridecyl phosphate ester (RHODAFAC_RS-610 made by Rhodia) were charged in a 1-pint aluminum can. The can was placed in a vacuum system equipped with heating and agitation. The mixture was allowed to react at high agitated speed at 180°F (82°C) under vacuum for 300 minutes. The product was purged with nitrogen and stored in a desiccator.

### Pre-reaction - Formulation R02

50 g BYK®-P 9065 (BYK USA Inc.) and 50 g polyoxyethylene tridecyl phosphate ester (RHODAFAC_RS-610 made by Rhodia) were charged in a 1-pint aluminum can. The can was placed in a vacuum system equipped with heating and agitation. The mixture was allowed to react at high agitated speed at 180°F (82°C) under vacuum for 300 minutes. The product was purged with nitrogen and stored in a desiccator.

### Pre-reaction - Formulation R03

50 g Capstone® FS-3100 (supplied by DuPont Chemicals & Fluoroproducts) and 50 g polyoxyethylene tridecyl phosphate ester (RHODAFAC_RS-61 0 made by Rhodia) were charged in a 1-pint aluminum can. The can was placed in a vacuum system equipped with heating and agitation. The mixture was allowed to react at high agitated speed at 180°F (82°C) under vacuum for 300 minutes. The product was purged with nitrogen and stored in a desiccator.

### Part A - Comparative Formulation A11 (no IMRA)

300 g Polypropylene oxide-based triol (MW 300) was charged in a 1-pint aluminum can. The can was placed in a vacuum system equipped with heating and agitation. The mixture was agitated at high speed at 200F (93C) under vacuum for 180 minutes. The product was purged with nitrogen and stored in a desiccator. This formulation represents the control Part A formulation with no mold release additives.

### Part A - Formulation A12

10 g Formulation A11 and 1.2 g Capstone® FS-3100 (DuPont Chemicals & Fluoroproducts) were charged in a 1-oz glass jar. The mixture was vigorously stirred for 2 minutes. The product was immediately used.

### Part A - Formulation A13

10 g Formulation A11 and 1.2 g TIGOMER® H-SI 2311 (Evonik Industries AG) were charged in a 1-oz glass jar. The mixture was vigorously stirred for 2 minutes. The product was immediately used.

### Part A - Formulation A14

10 g Formulation A11 and 1.2 g RHODASURF® ON-870 (Rhodia Inc.) were charged in a 1-oz glass jar. The mixture was vigorously stirred for 2 minutes. The product was immediately used.

### Part A - Formulation A15

10 g Formulation A11 and 1.2 g Formulation P01 were charged in a 1-oz glass jar. The mixture was vigorously stirred for 2 minutes. The product was immediately used.

### Part A - Formulation A16

10 g Formulation A11 and 1.2 g BYK®-P 9065 (BYK USA Inc.) were charged in a 1-oz glass jar. The mixture was vigorously stirred for 2 minutes. The product was immediately used.

### Part A - Formulation A17

10 g Formulation A11 and 1.2 g Capstone® FS-66 (DuPont Chemicals & Fluoroproducts) were charged in a 1-oz glass jar. The mixture was vigorously stirred for 2 minutes. The product was immediately used.

### Part A - Formulation A18

10 g Formulation A11 and 1.2 g polyoxyethylene tridecyl phosphate ester were charged in a 1-oz glass jar. The mixture was vigorously stirred for 2 minutes. The product was immediately used. The mixture was optically clear. The mixture did not separate after more than three (3) months of storage.

### Part A - Formulation A21

10 g Formulation A11, 1.2 g RHODASURF® ON-870 (Rhodia Inc.), and 1.2 g polyoxyethylene tridecyl phosphate ester were charged in a 1-oz glass jar. The mixture was vigorously stirred for 2 minutes. The product was immediately used.

### Part A - Formulation A22

10 g Formulation A11, 1.2 g Capstone® FS-66 (DuPont Chemicals & Fluoroproducts), and 1.2 g polyoxyethylene tridecyl phosphate ester were charged in a 1-oz glass jar. The mixture was vigorously stirred for 2 minutes. The product was immediately used.

### Part A - Formulation A23

10 g Formulation A11, 1.2 g BYK®-P 9065 (supplied by BYK USA Inc.), and 1.2 g polyoxyethylene tridecyl phosphate ester were charged in a 1-oz glass jar. The mixture was vigorously stirred for 2 minutes. The product was immediately used.

### Part A - Formulation A24

10 g Formulation A11, 1.2 g Formulation P01, and 1.2 g polyoxyethylene tridecyl phosphate ester were charged in a 1-oz glass jar. The mixture was vigorously stirred for 2 minutes. The product was immediately used.

### Part A - Formulation A25

10 g Formulation A11, 1.2 g TIGOMER® H-SI 2311 (Evonik Industries AG), and 1.2 g polyoxyethylene tridecyl phosphate ester were charged in a 1-oz glass jar. The mixture was vigorously stirred for 2 minutes. The product was immediately used.

### Part A - Formulation A26

10 g Formulation A11, 1.2 g Capstone® FS-3100 (DuPont Chemicals & Fluoroproducts), and 1.2 g polyoxyethylene tridecyl phosphate ester were charged in a 1-oz glass jar. The mixture was vigorously stirred for 2 minutes. The product was immediately used.

### Part A - Formulation A31

10 g Formulation A11 and 1.2 g Formulation R01 were charged in a 1-oz glass jar. The mixture was vigorously stirred for 2 minutes. The product was immediately used.

### Part A - Formulation A32

10 g Formulation A11 and 1.2 g Formulation R02 were charged in a 1-oz glass jar. The mixture was vigorously stirred for 2 minutes. The product was immediately used.

### Part A - Formulation A33

10 g Formulation A11 and 1.2 g Formulation R03 were charged in a 1-oz glass jar. The mixture was vigorously stirred for 2 minutes. The product was immediately used.

### Part B

Part B in each instance is polymeric diphenylmethane-diisocyanate ([NCO] 32%) known as PMDI or polymeric MDI.

### Final Formulations F11 ∼18, F21 ∼ 26, F31 ∼ 33

For every final formulation, an amount of a Part A formulation and an amount of Part B were charged in a 1-oz glass jar in certain weight ratio. The mixture was vigorously stirred for 30 second with a stainless steel spatula. The product was immediately used for tensile and shear debonding tests. Specific formulas and their testing results are given in Tables 1, 2, and 3.

**Table 1 Final formulations based on single IMRAs and test results**

| Formula | F11 | F12 | F13 | F14 | F15 | F16 | F17 | F18 |
|---|---|---|---|---|---|---|---|---|
| A11 (pbw)¹ | 1.1 | | | | | | | |
| A12 (pbw) | | 1.1 | | | | | | |
| A13 (pbw) | | | 1.1 | | | | | |
| A14 (pbw) | | | | 1.1 | | | | |
| A15 (pbw) | | | | | 1.1 | | | |
| A16 (pbw) | | | | | | 1.1 | | |
| A17 (pbw) | | | | | | | 1.1 | |
| A18 (pbw) | | | | | | | | 1.1 |
| Part B (pbw) | 1.3 | 1.3 | 1.3 | 1.3 | 1.3 | 1.3 | 1.3 | 1.3 |
| Debonding mode | Stain | Stain | Stain | Stain | Stain | Clean | Clean | Clean |
| Debonding strength(MPa) | 9.27 | 6.72 | 6.10 | 5.13 | 0.62 | 1.14 | 0.15 | 0.08 |

| | | | | | | | | |
|---|---|---|---|---|---|---|---|---|
| ¹ pbw is parts by weight | | | | | | | | |

**Table 2 Final formulations based on IMRA blends and test results**

| Formula | F21 | F22 | F23 | F24 | F25 | F26 |
|---|---|---|---|---|---|---|
| A21 (pbw) | 1.2 | | | | | |
| A22 (pbw) | | 1.2 | | | | |
| A23 (pbw) | | | 1.2 | | | |
| A24 (pbw) | | | | 1.2 | | |
| A25 (pbw) | | | | | 1.2 | |
| A26 (pbw) | | | | | | 1.2 |
| Part B (pbw) | 1.3 | 1.3 | 1.3 | 1.3 | 1.3 | 1.3 |
| Debonding mode | Stain | Stain | Clean | Clean | Clean | Clean |
| Debonding strength(MPa) | 0.14 | 0.11 | 0.15 | 0.13 | 0.11 | 0.10 |

**Table 3 Final formulations based on IMRA reaction products and test results**

| Formula | F31 | F32 | F33 |
|---|---|---|---|
| A31 (pbw) | 1.1 | | |
| A32 (pbw) | | 1.1 | |
| A33 (pbw) | | | 1.1 |
| Part B (pbw) | 1.3 | 1.3 | 1.3 |
| Debonding mode | Clean | Clean | Clean |
| Debonding strength(MPa) | 1.64 | 0.17 | 0.14 |

The data indicates that, for polyurethane molding process, polyoxyethylenetridecyl phosphate ester by itself (formulation F18) provides good release performance - clean release and low debonding strength, even at temperatures as low as 90 °C. A mixture of polyoxyethylene tridecyl phosphate ester and polyol was stable, did not separate and was clear at room temperatures.

Blends of polyoxyethylene tridecyl phosphate ester with other chemicals, such as for example, siloxane, fatty acid derivative, fluorochemical, and zinc salt, provide good release performance - clean release and low debonding strength (Table 2).

Reaction products of polyoxyethylene tridecyl phosphate ester with other chemicals, such as for example, siloxane, fatty acid derivative, and fluorochemical, provide good release performance - clean release and low debonding strength (Table 3).

## Claims

1. A two-part polyurethane composition comprising as an internal mold releasing agent a polyoxyethylene alkyl phosphate ester, a blend or a reaction product of a polyoxyethylene alkyl phosphate ester, wherein the polyoxyethylene alkyl phosphate ester comprises the structure: 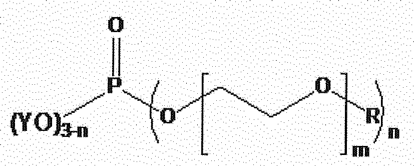 wherein
each R is independently selected from hydrogen, hydrocarbyl, or substituted hydrocarbyl;
each Y is independently selected from hydrogen, hydrocarbyl, or substituted hydrocarbyl;
each m is independently an integer from 1 to about 500; and
n is an integer from 1 to 3.

2. A two-part polyurethane composition of claim 1 wherein the polyoxyethylene alkyl phosphate ester comprises the structure: 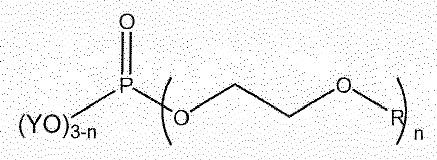 wherein
each R is independently selected from hydrogen, hydrocarbyl, or substituted hydrocarbyl;
each Y is independently selected from hydrogen, hydrocarbyl, or substituted hydrocarbyl; and
n is an integer from 1 to 3.

3. A two-part polyurethane composition of claim 1 wherein the polyoxyethylene alkyl phosphate ester comprises the structure: 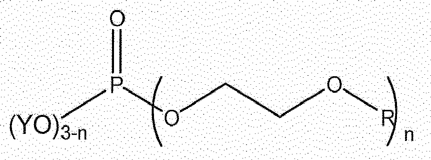 wherein R is hydrogen; Y is alkyl; and n is an integer from 1 to 3.

4. The two-part polyurethane composition of any of claims 1 to 3, wherein the polyurethane composition comprises a polyol composition and a separate polyisocyanate composition; and at least one of the polyol composition or polyisocyanate composition includes an internal mold release agent.

5. The two-part polyurethane composition of any of claims 1 to 4, wherein the polyurethane composition comprises a polyisocyanate composition; and a separate polyol composition including the internal mold release agent.

6. The two-part polyurethane composition of any of claims 1 to 5, wherein the polyurethane composition comprises a polyisocyanate composition; and a separate polyether polyol composition including the internal mold release agent.

7. A method of reducing adhesion of cured reaction products of a two-part polyurethane composition of any of claims 1 to 6 to a metal mold.

8. A process for production of a molded polyurethane article, comprising:
providing a mold defining a mold cavity;
providing a two-part polyurethane composition of any of claims 1 to 6;
disposing the polyurethane composition in the mold cavity; and
curing the polyurethane composition to form cured reaction products in the mold cavity.

9. The process of claim 8 wherein the two-part polyurethane composition comprises a polyol composition and a separate polyisocyanate composition, wherein at least one of the polyol composition or the polyisocyanate composition includes an internal mold release agent.

10. The process of claim 8 wherein the two-part polyurethane composition comprises a polyol composition and a separate polyisocyanate composition, wherein an internal mold release agent is added to the polyurethane composition after mixing of the polyol composition and the polyisocyanate composition.

## Patentansprüche

1. Zwei-Komponenten-Polyurethanzusammensetzung, umfassend einen Polyoxyethylenalkylphosphatester, eine Mischung oder ein Umsetzungsprodukt eines Polyoxyethylenalkylphosphatesters als ein internes Formtrennmittel, wobei der Polyoxyethylenalkylphosphatester die Struktur umfasst: 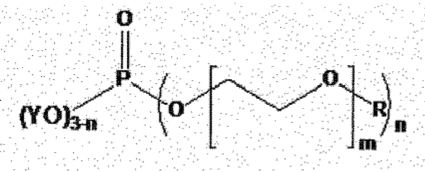 wobei
jedes R unabhängig aus Wasserstoff, Hydrocarbyl oder substituiertem Hydrocarbyl ausgewählt ist;
jedes Y unabhängig aus Wasserstoff, Hydrocarbyl oder substituiertem Hydrocarbyl ausgewählt ist;
jedes m unabhängig eine ganze Zahl von 1 bis etwa 500 ist; und
n eine ganze Zahl von 1 bis 3 ist.

2. Zwei-Komponenten-Polyurethanzusammensetzung nach Anspruch 1, wobei der Polyoxyethylenalkylphosphatester die Struktur umfasst: 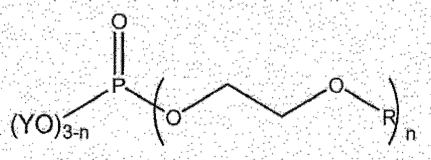 wobei
jedes R unabhängig aus Wasserstoff, Hydrocarbyl oder substituiertem Hydrocarbyl ausgewählt ist; jedes Y unabhängig aus Wasserstoff, Hydrocarbyl oder substituiertem Hydrocarbyl ausgewählt ist; und n eine ganze Zahl von 1 bis 3 ist.

3. Zwei-Komponenten-Polyurethanzusammensetzung nach Anspruch 1, wobei der Polyoxyethylenalkylphosphatester die Struktur umfasst: 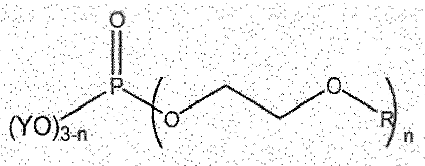 wobei R Wasserstoff ist; Y Alkyl ist; und n eine ganze Zahl von 1 bis 3 ist.

4. Zwei-Komponenten-Polyurethanzusammensetzung nach einem der Ansprüche 1 bis 3, wobei die Polyurethanzusammensetzung eine Polyolzusammensetzung und eine separate Polyisocyanatzusammensetzung umfasst; und mindestens eine der Polyolzusammensetzung oder der Polyisocyanatzusammensetzung ein internes Formtrennmittel enthält.

5. Zwei-Komponenten-Polyurethanzusammensetzung nach einem der Ansprüche 1 bis 4, wobei die Polyurethanzusammensetzung eine Polyisocyanatzusammensetzung; und eine separate Polyolzusammensetzung, die das interne Formtrennmittel enthält, umfasst.

6. Zwei-Komponenten-Polyurethanzusammensetzung nach einem der Ansprüche 1 bis 5, wobei die Polyurethanzusammensetzung eine Polyisocyanatzusammensetzung; und eine separate Polyetherpolyolzusammensetzung, die das interne Formtrennmittel enthält, umfasst.

7. Verfahren zum Verringern einer Haftung von ausgehärteten Umsetzungsprodukten einer Zwei-Komponenten-Polyurethanzusammensetzung nach einem der Ansprüche 1 bis 6 an eine Metallform.

8. Vorgang zum Herstellen eines geformten Polyurethanerzeugnisses, umfassend:
Bereitstellen einer Form, die einen Formhohlraum definiert;
Bereitstellen einer Zwei-Komponenten-Polyurethanzusammensetzung nach einem der Ansprüche 1 bis 6;
Anordnen der Polyurethanzusammensetzung im Formhohlraum; und
Aushärten der Polyurethanzusammensetzung zum Ausbilden von ausgehärteten Umsetzungsprodukten im Formhohlraum.

9. Vorgang nach Anspruch 8, wobei die Zwei-Komponenten-Polyurethanzusammensetzung eine Polyolzusammensetzung und eine separate Polyisocyanatzusammensetzung umfasst; wobei mindestens eine der Polyolzusammensetzung oder der Polyisocyanatzusammensetzung ein internes Formtrennmittel enthält.

10. Vorgang nach Anspruch 8, wobei die Zwei-Komponenten-Polyurethanzusammensetzung eine Polyolzusammensetzung und eine separate Polyisocyanatzusammensetzung umfasst, wobei ein internes Formtrennmittel nach einem Mischen der Polyolzusammensetzung und der Polyisocyanatzusammensetzung zu der Polyurethanzusammensetzung hinzugegeben wird.

## Revendications

1. Composition de polyuréthane en deux parties comprenant en tant qu'agent de démoulage interne un ester phosphorique d'alkyle de polyoxyéthylène, un mélange ou un produit de réaction d'un ester phosphorique d'alkyle de polyoxyéthylène, dans laquelle l'ester phosphorique d'alkyle de polyoxyéthylène comprend la structure : 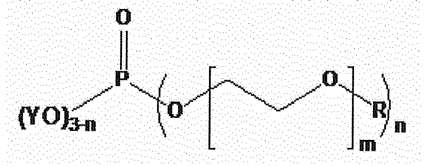 dans laquelle
chaque R est indépendamment choisi parmi hydrogène, hydrocarbyle ou hydrocarbyle substitué ;
chaque Y est indépendamment choisi parmi hydrogène, hydrocarbyle ou hydrocarbyle substitué ;
chaque m est indépendamment un nombre entier entre 1 et environ 500 ; et
n est un nombre entier entre 1 et 3.

2. Composition de polyuréthane en deux parties selon la revendication 1 dans laquelle l'ester phosphorique d'alkyle de polyoxyéthylène comprend la structure : 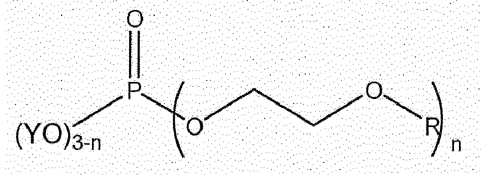 dans laquelle
chaque R est indépendamment choisi parmi hydrogène, hydrocarbyle ou hydrocarbyle substitué ;
chaque Y est indépendamment choisi parmi hydrogène, hydrocarbyle ou hydrocarbyle substitué ; et
n est un nombre entier entre 1 et 3.

3. Composition de polyuréthane en deux parties selon la revendication 1 dans laquelle l'ester phosphorique d'alkyle de polyoxyéthylène comprend la structure : 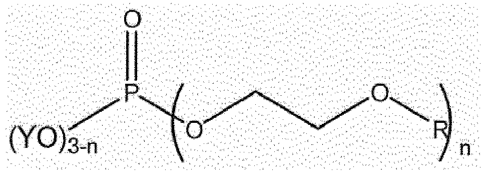 dans laquelle R est hydrogène ; Y est alkyle ; et n est un nombre entier entre 1 et 3.

4. Composition de polyuréthane en deux parties selon l'une quelconque des revendications 1 à 3, la composition de polyuréthane comprenant une composition de polyol et une composition de polyisocyanate séparée ; et au moins une composition parmi la composition de polyol ou la composition de polyisocyanate comprend un agent de démoulage interne.

5. Composition de polyuréthane en deux parties selon l'une quelconque des revendications 1 à 4, la composition de polyuréthane comprenant une composition de polyisocyanate ; et une composition de polyol séparée comprenant l'agent de démoulage interne.

6. Composition de polyuréthane en deux parties selon l'une quelconque des revendications 1 à 5, la composition de polyuréthane comprenant une composition de polyisocyanate ; et une composition de polyol de polyéther séparée comprenant l'agent de démoulage interne.

7. Procédé pour réduire l'adhérence de produits de réaction durcis d'une composition de polyuréthane en deux parties selon l'une quelconque des revendications 1 à 6 à un moule métallique.

8. Processus de production d'un article moulé en polyuréthane, comprenant les étapes suivantes :
fournir un moule définissant une cavité de moule ;
fournir une composition de polyuréthane en deux parties selon l'une quelconque des revendications 1 à 6 ;
disposer la composition de polyuréthane dans la cavité de moule ; et
durcir la composition de polyuréthane pour former des produits de réaction durcis dans la cavité de moule.

9. Processus selon la revendication 8 dans lequel la composition de polyuréthane en deux parties comprend une composition de polyol et une composition de polyisocyanate séparée, dans lequel au moins une composition parmi la composition de polyol ou la composition de polyisocyanate comprend un agent de démoulage interne.

10. Processus selon la revendication 8 dans lequel la composition de polyuréthane en deux parties comprend une composition de polyol et une composition de polyisocyanate séparée, dans lequel un agent de démoulage interne est ajouté à la composition de polyuréthane après le mélange de la composition de polyol avec la composition de polyisocyanate.
